# EUROPÄISCHE PATENTSCHRIFT

(11) **EP 1 453 178 B1**
(45) Veröffentlichungstag und Bekanntmachung des Hinweises auf die Patenterteilung: **15.06.2005**
(21) Anmeldenummer: 04002407.7
(22) Anmeldetag: 04.02.2004
(51) Int. Cl.: H02K 1/06

(54) **Elektrische Maschine**
Electrical Machine
Machine électrique

(30) Priorität: 28.02.2003 DE 10308745
(43) Veröffentlichungstag der Anmeldung: 01.09.2004
(73) Patentinhaber: SICK STEGMANN GmbH, 78166 Donaueschingen (DE)
(72) Erfinder: Siraky, Josef, 78166 Donaueschingen (DE)
(74) Vertreter: Patentanwälte Westphal, Mussgnug & Partner

(56) Entgegenhaltungen:
- WO-A-91/09442
- DE-A- 2 364 428
- DE-C- 843 440

## Beschreibung

Die Erfindung betrifft eine elektrische Maschine gemäß dem Oberbegriff des Anspruchs 1.

Elektrische Maschinen, d. h. Elektromotoren und elektrische Generatoren bestehen aus einem beweglichen, insbesondere rotierenden Teil, dem Rotor, und einem feststehenden Teil, dem Stator. Diese Teile, weisen in einer Teilung angeordnete ferromagnetische Pole auf, die magnetisch aufeinander einwirken, um das das bewegliche Teil in Bewegung versetzende Moment zu erzeugen bzw. um in dem stehenden Teil einen Strom zu induzieren. Bei wenigstens einem der Teile sind die Pole durch eine stromdurchflossene Wicklung magnetisierbar, wobei je nach Stromfluss ein statisches oder ein sich änderndes Magnetfeld erzeugt wird. Bei dem jeweils anderen Teil können die Pole permanent magnetisch oder ebenfalls durch eine stromdurchflossene Wicklung magnetisierbar ausgebildet sein.

Bei den bekannten elektrischen Maschinen ist die stromdurchflossene Wicklung jeweils um die radial zur Rotationsachse ausgerichteten Pole gewickelt. Dadurch sind gewisse Mindestabmessungen in der Ausbildung der Pole erforderlich, die einer kleinen kompakten Ausbildung der elektrischen Maschine entgegenstehen. Außerdem verläuft das elektrisch erregte Magnetfeld über einen relativ großen Weg im Luftspalt zwischen den Polen, was der effizienten Ausnutzung der elektrischen Energie und damit dem Wirkungsgrad der elektrischen Maschine entgegensteht.

Dokument DE-A 23 64 428 offenbart einen Impuls-Drehzahlgeber, dessen Stator aus einer Ringspule besteht, um die ein ferromagnetischer Draht toroidal gewickelt ist. Um jeweils zwei gegenüberliegende azimutale Seiten der Toroidwendel herum wurde durch abwechselndes Abfräsen je ein Drahtstück aus jeder zweiten Wendel entfernt. Die Pole bestehen daher aus C-förmigen Drahtsegmenten mit jeweils gegenüberliegenden Öffnungen.

Der Erfindung liegt die Aufgabe zugrunde, eine kompakte elektrische Maschine von einfachem Aufbau und mit hohem Wirkungsgrad zu schaffen.

Diese Aufgabe wird erfindungsgemäß gelöst durch eine elektrische Maschine mit den Merkmalen des Anspruchs 1.

Vorteilhafte Ausführungen der Erfindung sind in den Unteransprüchen angegeben.

Der wesentliche Gedanke der Erfindung besteht darin, die stromdurchflossene Wicklung des elektromagnetisch erregten Teiles als ringförmig geschlossen gewickelte Spule auszubilden. Bei einer kreiszylindrisch gewickelten Spule fällt die Zylinderachse mit der Rotationsachse der elektrischen Maschine zusammen. Die Spule wird schraubenlinienförmig mit einem Band aus einem ferromagnetischen Material umwickelt. Bei einer zylindrischen Spule umschließt dieses Band die Spule somit toroidförmig. Die Windungen des schraubenlinienförmig gewickelten Bandes sind in Umfangsrichtung der Spule voneinander beabstandet, sodass zwischen den einzelnen Windungen jeweils ein vorzugsweise kleiner Spalt gebildet ist.

Wird die Spule von einem elektrischen Strom durchflossen, so erzeugt dieser in der geschlossenen Spule in Umfangsrichtung fließende Strom ein Magnetfeld, welches die Spule in den axialen Schnittebenen umschließt. Dieses Magnetfeld verläuft in dem die Spule umschließenden ferromagnetischen Band. Da dieses Band jedoch schraubenlinienförmig gewickelt ist, können die Magnetfeldlinien nicht in sich geschlossen in dem Band die Spule umschließen. Die Magnetfeldlinien schließen sich daher über den Spalt zwischen den einzelnen voneinander beabstandeten Windungen des Bandes, sodass sich entlang des Bandes an dessen Rändern zwei entgegengesetzt magnetisierte Segmente bilden. Da die Windungen voneinander beabstandet sind, kommt es zu keinem magnetischen Kurzschluss zwischen den einzelnen Windungen. Es stehen sich vielmehr jeweils die entgegengesetzt magnetisierten Segmente benachbarter Windungen gegenüber, sodass durch das Band auf dem Umfang der Spule eine der Anzahl der Windungen des Bandes entsprechende Anzahl von Magnetpolpaaren erzeugt wird.

Je nach dem Querschnitt des ferromagnetischen Bandes und dem Abstand, mit welchem das Band auf die Spule gewickelt wird, kann die Zahl der Polpaare bestimmt werden. Wird der Abstand der Windungen klein gewählt, ergeben sich geringe Luftspalte für das Magnetfeld, sodass die elektrische Energie mit hohem Wirkungsgrad ausgenutzt wird. Außerdem lässt sich ein kleiner kompakter radialer und axialer Aufbau des Elektromotors realisieren.

Vorzugsweise weist das ferromagnetische Band keinen materialeinheitlichen Querschnitt auf, sondern wird durch ein Bündel von dünnen elektrisch gegeneinander isolierten, z. B. lackierten Drähten aus einem ferromagnetischen Material, z. B. Eisen, gebildet. Dadurch werden Wirbelstromverluste in dem Band reduziert. Außerdem ist es dadurch möglich, die Querschnittsform des Bandes bei gleichbleibender Querschnittsfläche zu ändern. Das Band kann am Innenumfang einer kreiszylindrischen Spule mit größerer Dicke in Radiusrichtung der Spule und geringerer Breite in Umfangsrichtung der Spule und am Außenumfang der Spule mit geringerer Dicke in Radiusrichtung der Spule und größerer Breite in Umfangsrichtung der Spule ausgebildet werden. Dadurch ist es möglich, die Breite des Spaltes zwischen den einzelnen Windungen des Bandes durchgehend konstant zu halten. Ebenso kann durch die Änderung der Querschnittsform des Bandes bei gleichbleibender Querschnittsfläche eine gezielte Vergrößerung und Verkleinerung des Abstandes zwischen den einzelnen Windungen des Bandes erzielt werden, um die Form der durch das Band gebildeten Magnetpole zu beeinflussen.

Es ist ohne Weiteres ersichtlich, dass die erfindungsgemäße Ausbildung der Pole mittels einer zylindrischen Spule und einem diese Spule toroidförmig umschließenden ferromagnetischen Band sowohl für den Rotor als auch für den Stator eines Elektromotors oder eines Generators verwendet werden kann.

Bei einem rotierenden Elektromotor oder Generator ist die Spule als kreiszylindrische Spule gewickelt, wobei die Zylinderachse der Spule und der Rotationsachse des Motors bzw. Generators zusammenfällt. Die Spule kann jedoch auch so gestaltet sein, dass sie einen geradlinigen Umfangsabschnitt aufweist, also z. B. eine etwa rechteckige Form aufweist. In diesem Falle sind die durch das schraubenlinienförmig gewickelte Band gebildeten Magnetpolpaare in diesem Umfangsabschnitt linear angeordnet, so dass ein elektrischer Linearmotor oder Lineargenerator hergestellt werden kann.

Im Folgenden wird die Erfindung anhand eines in der Zeichnung dargestellten Ausführungsbeispieles näher erläutert. Es zeigen:
- Fig. 1: eine Spule mit toroidförmig umschließendem ferromagnetischen Band,
- Fig. 2: einen Axialschnitt durch einen erfindungsgemäß aufgebauten Elektromotor und
- Fig. 3: schematisch den Aufbau des Bandes.

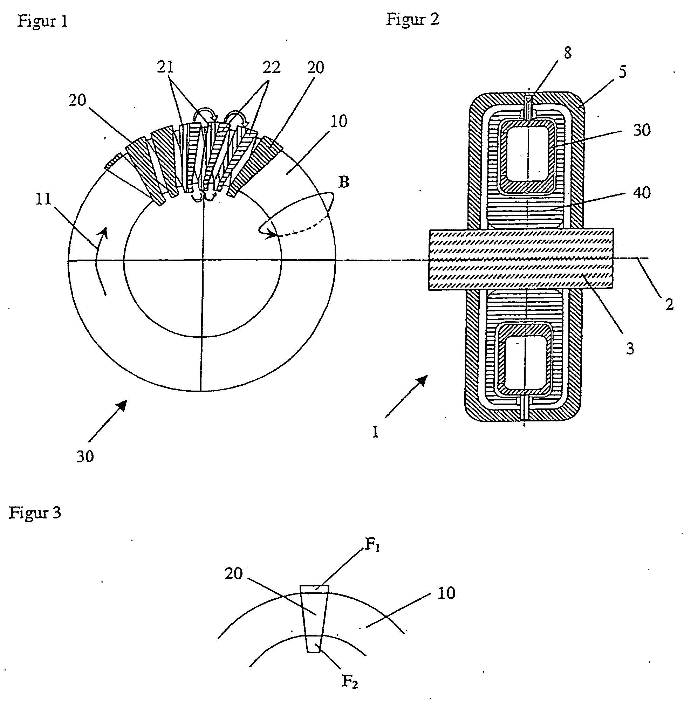

Wie Fig. 1 zeigt, wird eine stromdurchflossene Spule 10 zylindrisch gewickelt, wobei die Zylinderachse mit der Rotationsachse des Elektromotors zusammenfällt. In Fig. 1 ist durch den Pfeil 11 der Wicklungssinn der Spule 10 und damit auch die Richtung des Stromflusses durch die Spule 10 angedeutet. Die Spule 10 ist in Bezug auf die Zylinderachse, d. h. die Rotationsachse des Elektromotors, rotationssymmetrisch, wobei der Querschnitt der Spule im Axialschnitt kreisförmig, rechteckig, oval oder in sonstiger Weise gestaltet sein kann, wie dies den jeweiligen Erfordernissen des Elektromotors entspricht.

Um die Spule 10 wird schraubenlinienförmig ein Band 20 gewickelt, welches aus einem ferromagnetischen Material besteht. In Fig. 1 ist das Band 20 nur über einen Winkelabschnitt der Spule 10 gezeichnet. Das Band 20 umschließt jedoch die Spule 10 über deren gesamten Umfang. Durch die schraubenlinienförmige Wicklung des Bandes 20 umschließt dieses Band 20 die Spule 10 toroidförmig über den gesamten Spulenumfang. Das Band 20 ist so gewickelt, dass die einzelnen Windungen des Bandes 20 in Umfangsrichtung der Spule voneinander beabstandet sind.

Vorzugsweise besteht das Band 20 aus einem Bündel von dünnen isolierten, z. B. lackierten Eisendrähten. Dadurch werden Wirbelstromverluste in dem Band 20 minimiert. Außerdem kann die Querschnittform des Bandes 20 geändert werden, ohne die Querschnittsfläche des Bandes 20 zu ändern. Wie in Fig. 3 schematisch verdeutlicht ist, kann auf diese Weise das Band 20 so geformt sein, dass es an dem Innenumfang der Spule 10 eine geringere Breite und eine größere Dicke aufweist als am Außenumfang der Spule 10. Es ergeben sich somit am Außenumfang der Spule eine flache breite Querschnittsform und am Innenumfang eine schmale hohe Querschnittsform, wobei die Querschnittsfläche F1 am Außenumfang und die Querschnittsfläche F2 am Innenumfang gleich sind. Dadurch ist es möglich, das Band 20 so schraubenlinienförmig auf die Spule 10 zu wickeln, dass der Abstand der aufeinander folgenden Windungen des Bandes 20 über den gesamten Windungsumfang konstant bleibt, wie dies in Fig. 1 sichtbar ist.

Wird die Spule 10 von einem Strom durchflossen, so erzeugt dieser Strom ein die Spule ringförmig umschließendes Magnetfeld B. Da das Magnetfeld B keine Divergenz aufweist, können die magnetischen Feldlinien nicht in dem schraubenlinienförmig gewickelten Band 20 in sich geschlossen umlaufen. Das Magnetfeld B muss sich daher jeweils über den Abstandsspalt zwischen den einzelnen Windungen des Bandes 20 schließen. Dadurch bilden sich in dem Band 20 in dessen Längsrichtung zwei entgegengesetzt zueinander magnetisierte Segmente aus, die in Fig. 1 durch unterschiedliche Schraffierung symbolisiert sind und mit 21 bzw. 22 bezeichnet sind. Durch die entgegengesetzte Magnetisierung der Bandsegmente 21 und 22 bildet das Band 20 über den Umfang der Spule 10 mit gleicher Teilung angeordnete Magnetpole, deren Anzahl gleich der Anzahl der Windungen des Bandes 10 ist.

In Fig. 2 ist ein Ausführungsbeispiel des Elektromotors schematisch dargestellt. Der Elektromotor 1 weist eine sich um seine Rotationsachse 2 drehende Welle 3 auf. Auf der Welle 3 sitzt drehfest ein permanent magnetischer Rotor 40. Der Rotor 40 umschließt einen Stator 30, der in der in Fig. 1 dargestellten Weise aus einer stromdurchflossenen Spule 10 mit toroidförmig umschließendem ferromagnetischen Band 20 besteht. Der Stator 30 wird in einem Gehäuse 5 des Elektromotors 1 über Befestigungselemente 8 drehfest gehalten. Wird an die Spule 10 des Stators 30 eine Wechselspannung angelegt, so wird der permanent magnetische Rotor 40 gegenüber dem Stator 30 in Drehung versetzt und treibt die Welle 3 an.

### Bezugszeichenliste

- 1: Elektromotor
- 2: Rotationsachse
- 3: Welle
- 5: Gehäuse
- 8: Befestigungselement
- 10: Spule
- 11: Wicklungssinn

- 20: ferromagnetisches Band
- 21: Segmente
- 22: Segmente

- 30: Stator

- 40: Rotor

- B: Magnetfeld

- F1: Bandquerschnittsfläche
- F2: Bandquerschnittsfläche

## Patentansprüche

1. Elektrische Maschine (1) mit wenigstens einem beweglichen Teil (40) und wenigstens einem stehenden Teil (30), die magnetisch aufeinander einwirkende ferromagnetische Pole (21, 22) aufweisen, wobei bei wenigstens einem der Teile die Pole (21, 22) durch eine stromdurchflossene Wicklung magnetisierbar sind,
**dadurch gekennzeichnet, dass** die stromdurchflossene Wicklung eine ringförmig geschlossen gewickelte Spule (10) ist und dass ein ferromagnetisches Band (20) schraubenlinienförmig um die Spule (10) gewickelt ist, wobei die voneinander in Umfangsrichtung der Spule (10) beabstandeten Windungen des Bandes (20) die magnetisierbaren Pole (21, 22) bilden.

2. Maschine nach Anspruch 1 mit wenigstens einem rotierenden Teil (Rotor) (40) und wenigstens einem stehenden Teil (Stator) (30), **dadurch gekennzeichnet, dass** die stromdurchflossene Wicklung eine die Rotationsachse (2) der Maschine (1) kreiszylindrisch umschließende Spule (10) ist und dass das ferromagnetische Band (20) die Spule (10) toroidförmig umschließt.

3. Maschine nach Anspruch 1 oder 2,
**dadurch gekennzeichnet, dass** das Band (20) durch ein Bündel von elektrisch isolierten, z. B. lackierten Drähten aus ferromagnetischem Material, insbesondere Eisen, gebildet ist.

4. Elektromotor nach einem der vorhergehenden Ansprüche,
**dadurch gekennzeichnet, dass** das Band (20) bei konstanter Querschnittsfläche in seiner Querschnittsform so variiert, dass die Windungen des Bandes (20) über dessen gesamte Länge einen konstanten Abstand aufweisen.

5. Maschine nach einem der Ansprüche 2 bis 4,
**dadurch gekennzeichnet, dass** die Spule (10) mit dem ferromagnetischen Band (20) das stehende Teil (Stator 30) bzw. das rotierende Teil (Rotor 40) eines Elektromotors (1) bildet, während das jeweils andere Teil permanentmagnetisch ausgebildet ist.

## Claims

1. An electric machine (1) having at least one moveable part (40) and at least one stationary part (30), which comprise ferromagnetic poles (21, 22) magnetically acting on one another, wherein in the case of at least one of the parts the poles (21, 22) can be magnetised by an energised winding,
**characterised in that** the energised winding is a wound coil (10) closed in a ring
and **in that** a ferromagnetic strip (20) is wound helically around the coil (10), with the windings of the strip (20) spaced from each other in the circumferential direction of the coil (10) forming the magnetisable poles (21, 22).

2. A machine according to Claim 1 having at least one rotating part (rotor) (40) and at last one stationary part (stator) (30),
**characterised in that** the energised winding is a coil (10) that encloses the axis of rotation (2) of the machine (1) like a circular cylinder
and **in that** the ferromagnetic strip (20) surrounds the coil (10) toroidally.

3. A machine according to Claim 1 or 2,
**characterised in that** the strip (20) is formed by a bundle of electrically insulated, e.g. lacquered, wires made from ferromagnetic material, in particular iron.

4. An electric motor according to one of the preceding Claims,
**characterised in that** the cross sectional shape of the strip (20) varies with a constant cross-sectional area so that the windings of the strip (20) have a constant spacing over its entire length.

5. A machine according to one of Claims 2 to 4,
**characterised in that** the coil (10) with the ferromagnetic strip (20) forms the stationary part (stator 30) and the rotating part (rotor 40) of an electric motor (1), while the respective other part is constructed as a permanent magnet.

## Revendications

1. Machine électrique (1) comportant au moins une partie mobile (40) et au moins une partie fixe (30) munies de pôles (21, 22) ferromagnétiques qui ont une action magnétique les uns sur les autres, les pôles (21, 22) pouvant être aimantés sur au moins une des parties par un enroulement traversé par du courant,
**caractérisée en ce que**
l'enroulement traversé par du courant est une bobine (10) enroulée et fermée en anneau, et une bande (20) ferromagnétique est enroulée en hélice autour de la bobine (10), les enroulements de la bande (20) écartés les uns des autres en direction périphérique de la bobine (10) formant les pôles aimantables.

2. Machine selon la revendication 1 comportant au moins une partie tournante (rotor 40) et au moins une partie fixe (stator 30),
**caractérisée en ce que**
l'enroulement traversé par du courant est une bobine (10) qui entoure en cylindre circulaire l'axe de rotation (2) de la machine (1), et
la bande (20) ferromagnétique entoure sous forme de bobine toroïdale la bobine (10).

3. Machine selon la revendication 1 ou 2,
**caractérisée en ce que**
la bande (20) est formée par un faisceau de fils isolés électriquement, par exemple laqués, en matériau ferromagnétique, en particulier le fer.

4. Moteur électrique selon l'une des revendications précédentes,
**caractérisé en ce que**
pour une surface de section transversale constante, la bande (20) a une forme de section transversale modifiée de telle manière que les spires de la bande (20) ont un écart constant sur toute sa longueur.

5. Machine selon l'une des revendications 2 à 4,
**caractérisée en ce que**
la bobine (10) forme avec la bande (20) ferromagnétique la partie fixe (stator 30) ou la partie mobile (rotor 40) d'un moteur électrique (1) tandis que l'autre des parties est un aimant permanent.
